# EUROPEAN PATENT APPLICATION

(11) **EP 1 471 771 A2**
(43) Date of publication of application: **27.10.2004**
(21) Application number: 04006858.7
(22) Date of filing: 22.03.2004
(51) Int. Cl.: H04S 3/00, H04R 5/04, H04N 5/64

(54) **Audio reproduction apparatus and video receiving apparatus**

(30) Priority: 25.04.2003 JP 2003122521
(71) Applicant: Kabushiki Kaisha Toshiba, Tokyo 105-8001 (JP)
(72) Inventor: Endo, Masafumi c/o Toshiba Corporation, Minato-ku Tokyo 105-8001 (JP)
(74) Representative: Henkel, Feiler & Hänzel

(57) **Abstract**

An audio reproduction apparatus includes an extraction unit (41), which receives an input signal, extracts a main audio signal and a surround audio signal therefrom, and outputs the main audio signal and surround audio signal, and an audio processing unit (15), which amplifies the surround audio signal from the extraction unit and outputs the amplified surround audio signal to an output terminal (23) so that the signal is directly supplied to external equipment and further outputs the surround audio signal to an output terminal (24) so that the signal is supplied to external equipment, thereby the surround audio signal can be reproduced by external speakers (33 and 34) and by an external device (WT), respectively.

## Description

The present invention relates to an audio reproduction apparatus built into a digital television and the like, and to a video receiving apparatus such as the digital television and the like, and more particularly, to an audio reproduction apparatus that handles surround sound and a video receiving apparatus.

Recently, AV equipment that handles a digital signal has been developed and manufactured and is becoming widespread. As a technology for the AV equipment described above, there is known a technology that can readily reproduces a sound field in which users feel as if they were in theaters or concerts by using a plurality of speaker units as in a so-called surround system, Dolby system, and the like.

As a prior art relating to the above technology, Jpn. Pat. Appln. KOKAI Publication No. 5-122800 discloses a surround system constructed of a plurality of speakers each of which can vary the level of an audio signal according to a listening point of a listener. This is a technology for creating an optimum sound field by automatically adjusting an audio signal level according to a position of the listener even the listener moves from the center of the four speakers.

In the above surround system, when it is intended to, for example, couple a surround system main body with surround speakers wirelessly, a surround signal is transmitted using a wireless transmitter. In the prior art described above, however, even if an output for a right surround speaker and an output for a left surround speaker are provided, respectively as sound outputs from a digital television, when only a terminal for directly connecting each speaker is prepared to it, a problem arises in that even if the wireless transmitter is connected to the speakers, an output is excessive large and the speakers cannot be stably operated because the output is a signal amplified for the speakers.

An object of the present invention is to provide an audio reproduction apparatus that can provide external surround equipment by providing a dedicated output terminal for connecting the external equipment as well as to provide a video receiving apparatus using the audio reproduction apparatus.

The present invention provides an audio reproduction apparatus having an input terminal (26) which receives input audio signals; and an extraction unit (41) which extracts and outputs a main audio signal and a surround audio signal from the audio signals received by the input terminal, characterized by further comprising:
a signal processing unit (15) which amplifies the main audio signal output from the extraction unit and outputs the main audio signal to a first output unit (22), amplifies the surround audio signal output therefrom and outputs the signal to a second output unit (23) for external speakers, and further outputs the surround audio signal to a third output unit (24) for external equipment.

Further, the present invention provides a video receiving apparatus having an input terminal (26) which receives input signals including a video signal and an audio signal; a separation unit (14) which separates the audio signal and the video signal from the input signals received by the input terminal; an image processing unit (12) which processes the video signal from the separation unit and displays the video signal on a display unit; and an extraction unit (41) which receives the separated audio signal, and which extracts a main audio signal and a surround audio signal from the input audio signal and outputs the main audio signal and the surround audio signal, characterized by further comprising:
a signal processing unit (15) which amplifies the main audio signal output from the extraction unit and outputs the main audio signal to a first output unit (22), amplifies the surround audio signal output therefrom and outputs the signal to a second output unit (23) for external speakers, and further outputs the surround audio signal to a third output unit (24) for external equipment.

Since the audio reproduction apparatus or the video receiving apparatus according to the invention has the configuration as described above, the apparatus is provided with an output unit (output terminal) that can output a surround audio signal to external speakers and audio-dedicated external equipment in, for example, a 5.1 channel surround system. Accordingly, it is possible to connect, for example, a wireless transmitter as external surround audio equipment. With the above arrangement, it is possible to simultaneously reproduce surround sound using the external equipment while connecting dedicated surround speakers to the apparatus.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an example of a video receiving apparatus having an audio reproduction apparatus as an embodiment of the present invention;
FIG. 2 is a view explaining connection of the video receiving apparatus having the audio reproduction apparatus as the embodiment of the invention to external speakers and the like;
FIG. 3 is a block diagram showing a main portion of an audio processing unit acting as the audio reproduction apparatus as the embodiment of the invention;
FIG. 4 is a block diagram showing another example of the audio processing unit acting as the audio reproduction apparatus as the embodiment of the invention; and
FIG. 5 is a block diagram showing another main portion of the audio processing unit acting as the audio reproduction apparatus as the embodiment of the invention.

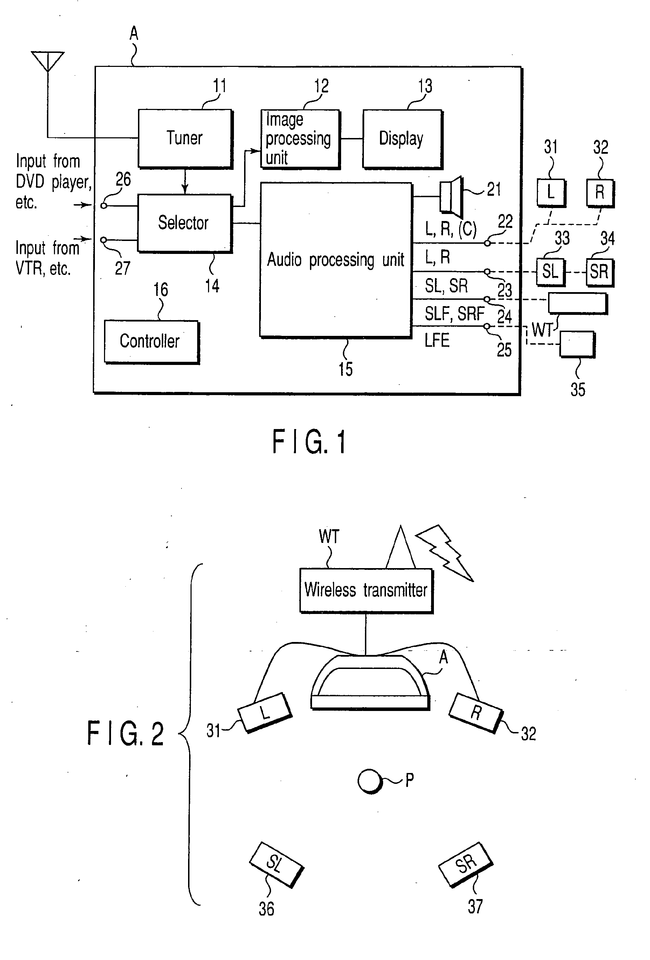

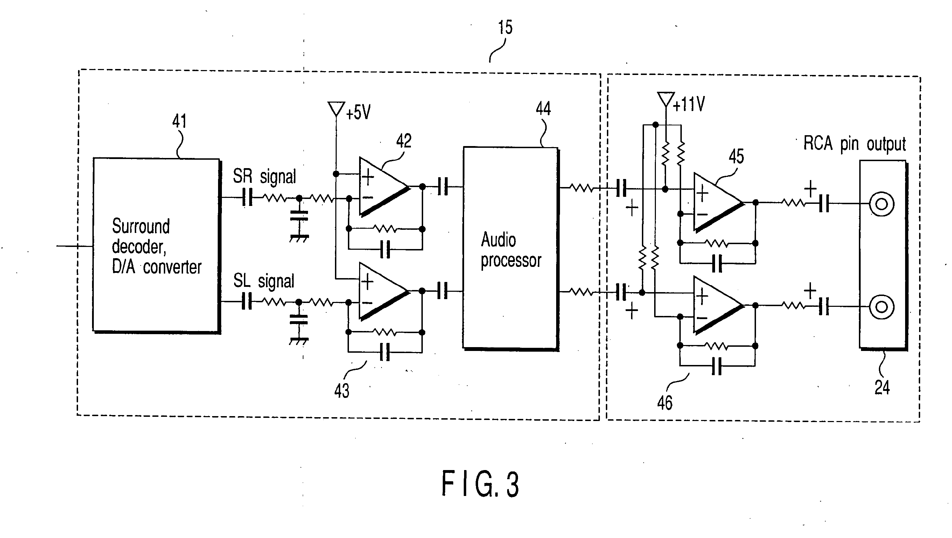

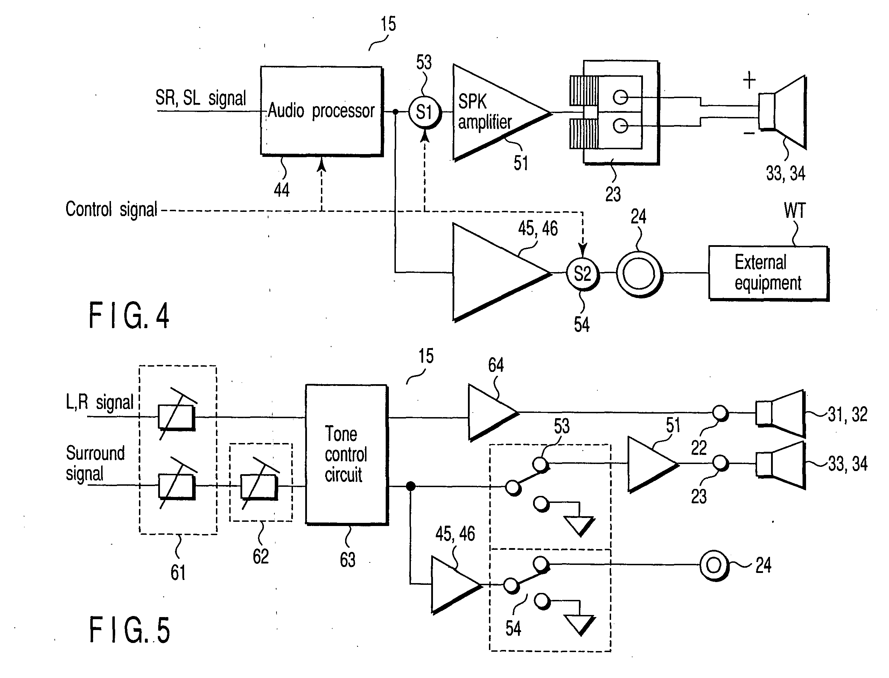

An audio reproduction apparatus and a video receiving apparatus as an embodiment of the present invention will be explained below with reference to the drawings. FIG. 1 is a block diagram showing an example of the video receiving apparatus having the audio reproduction apparatus as the embodiment of the invention, FIG. 2 is a block diagram showing an overall configuration of the audio reproduction apparatus as the embodiment of the invention, FIG. 3 is a block diagram showing a main portion of an audio processing unit acting as the audio reproduction apparatus as the embodiment of the invention, FIG. 4 is a view explaining connection of the video receiving apparatus having the audio reproduction apparatus as the embodiment of the invention to external speakers and the like, and FIG. 5 is a block diagram showing another main portion of the audio processing unit acting as the audio reproduction apparatus as the embodiment of the invention.

### (Audio Reproduction Apparatus and Video Receiving Apparatus)

As shown in FIG. 1, the audio reproduction apparatus according to the embodiment of the present invention is mainly composed of an audio processing unit 15 disposed in a video receiving apparatus A for reproducing surround sound. The video receiving apparatus A shown in FIG. 1 is, for example, a digital television device into which the audio processing unit 15 is built. However, the audio processing unit 15 may be provided as a discrete audio reproduction apparatus.

In FIG. 1, the video receiving apparatus A includes a tuner unit 11 connected to an antenna, an image processing unit 12 for processing a video signal, and a display 13 to which the video signal whose brightness, contrast, and the like have been adjusted in the image processing unit 12 is supplied, and a broadcast program, for example, is displayed on the display 13. Further, the video receiving apparatus A includes input terminals 26 and 27 to which signals are supplied from external equipment such as a DVD player, a VTR, and the like. Optical signals are input to these input terminals 26 and 27, through, for example, optical fibers, the signals input from the input terminals 26 and 27 and the tuner unit 11 are supplied to a selector unit 14, respectively, and a video signal and an audio signal corresponding to any one of the input signals are selectively output. The video signal from the selector unit 14 is output to the image processing unit 12, and the audio signal therefrom is output to the audio processing unit 15. Further, the video receiving apparatus A includes a controller 16 composed of a microprocessor for controlling the operation of the video receiving apparatus A in its entirety. Note that an instruction can be supplied from a user to the controller 16 through a remote controller.

Moreover, the video receiving apparatus A includes right (R) and left (L) speakers 21 built in a cabinet, and these speakers 21 are connected to the audio processing unit 15. In addition, the audio processing unit 15 includes an external speaker output terminal 22, an external surround speaker output terminal 23, an external surround output terminal 24, and a bass reflex output terminal 25. Each of the output terminals 22, 23, 24 is composed of a pair of R and L terminals.

As shown in FIG. 1 or FIG. 2, in the video receiving apparatus A, external speaker 31 and 32 are connected to the external speaker output terminal 22, external surround speakers 33 and 34 are connected to the external surround speaker output terminal 23, a wireless transmitter WT (or simply an external amplifier), for example, is connected to the external surround output terminal 24, and bass reflex speaker 35 is connected to the bass reflex output terminal 25.

In the video receiving apparatus A configured as described above, a broadcast signal, which has been selected and decoded by the tuner unit 11, or video/audio signals, which have been input from the DVD player, VTR and the like through the input terminals 26 and 27 are supplied to the selector unit 14. Video/audio signals of any one of these signals are selected under the control of the controller 16, the selected video signal is supplied to the image processing unit 12, and the selected audio signal is supplied to the audio processing unit 15.

The video signal is appropriately processed in the image processing unit 12 under the control of the controller 16, and an image is reproduced on the display 13. The audio signal is approximately processed in the audio processing unit 15, and reproduced sound is created by the built-in speakers 21. Further, reproduction and the like of a surround signal are executed in the audio processing unit 15, and the reproduced surround signal is supplied to the external speaker output terminal 22, the external surround speaker output terminal 23, the external surround output terminal 24, and further to the bass reflex output terminal 25, respectively.

### (Detailed Explanation of Audio Processing Unit)

Next, the audio processing unit 15 acting as the audio reproduction apparatus according to the embodiment of the invention will be explained. The audio processing unit 15 is composed of, for example, a Dolby surround decoder and reproduces a Dolby 5.1-channel or Dolby Prologic 4-channel digital audio signal. In the following description, it is assumed that the R- and L-channel signals of the Dolby digital signal or the Dolby Prologic signal are a main audio signal and that the R- and L-channel surround signals are a surround audio signal.

The detail and the mode of utilization of the audio processing unit 15 will be explained below in detail using FIG. 3 and the subsequent figures.

FIG. 3 shows an arrangement of a main portion of the audio processing unit 15, in which the audio signal selected by the selector unit 14 is supplied to the audio processing unit 15. When the signal is the Dolby 5.1 channel or Dolby Prologic 4-channel digital signal in the audio processing unit 15, surround signals SR and SL are extracted by a surround decoder 41. Necessary gains are given to the surround signals SR and SL by buffer circuits 42 and 43, respectively, and then the surround signals SR and SL are supplied to an audio processor 44 in which the input volumes thereof are adjusted. Further, necessary gains are given to the output signals by buffer circuits 45 and 46, and then the output signals are supplied to the external surround output terminal 24. The buffer circuits 45 and 46 are provided to obtain conditions (low impedance and correction of an output amplitude) suitable for connection to the external equipment.

The surround audio signal output from the external surround output terminal 24 is a variable output whose sound volume has been adjusted by the audio processor 44 and can be adjusted to an appropriate sound volume level by adjusting the surround level of a TV set without actuating the external equipment.

In contrast, as shown in FIG. 4, the surround signals SR and SL extracted by the surround decoder 41 pass through the audio processor 44, supplied to an amplifier unit 51 through a control switch 53, amplified at an amplification rate of a gain (for example, about 20 dB to 26 dB) for driving the external speakers 33, 34 (for example, 8 Ω, 16 Ω, 32 Ω), and supplied to the external surround speaker output terminal 23.

With the above operation, the surround audio signal can be reproduced by the external speakers 33 and 34. In addition, the surround audio signal from the audio processor 44 is output to the external surround output terminal 24 through the amplifier 45 (46) and a control switch 54, and can be reproduced by wireless speakers 36 and 37 (refer to FIG. 2) making use of the wireless transmitter WT and the like.

The control switches 53 and 54 are turned on and off in response to the control signal from the controller 16 or the control signal from a controller in the audio processing unit 15 and appropriately turns on one of the output from the external surround speaker output terminal 23 and the output from the external surround output terminal 24 or turns on both of the signals. Note that although FIG. 4 shows only each one of the amplifiers 51, 45, and the like, they are actually composed of circuits for R and L channels. (Modification)

FIG. 5 shows a modification of the audio reproduction apparatus according to the present invention. The modification shown in FIG. 5 is additionally provided with a gain controller 61, to which the R- and L-signals as the main audio signal and the surround audio signal are input, respectively, a gain balance controller 62, a tone control circuit 63, and further an amplifier unit 64 that obtains a gain for driving the external speakers.

As shown in FIG. 5, the respective gains of the R, L signals and the surround signal can be controlled in association with each other by the gain controller 61 in response to the control executed by the controller. That is, when the R, L signals are amplified to 1.2 times, the surround signal is also amplified to about 1.2 times. Further, the gain balance between the R, L signals and the surround signal can be controlled by the gain balance controller 62 in response to the control executed by the controller.

Moreover, in, for example, a Dolby Digital 5.1-channel or Dolby Prologic 4-channel sound system, signals (L, R, SL, SR, LFE, C), etc. are employed as the signals of the system. In the video receiving apparatus A, however, the built-in speakers 21 can be used as a center speaker by setting an operation mode under the control of the controller 16. That is, in this operation, a main audio signal output can be supplied to the external speakers 31 and 32 through the output terminal 22, and a Dolby Digital 5.1-channel or Dolby Prologic 4-channel center output (C) can be supplied to the built-in speakers 21 by setting these outputs so as to be automatically supplied thereto.

Additionally, it is also possible to control a tone so that it is appropriately output to the wireless transmitter WT and the like by controlling the tone control circuit 63 of FIG. 5 under the control of the controller 16. For example, noise can be suppressed by suppressing treble by the tone control. Further, it is also possible to control the tones of the outputs from the external speakers using a value unique to a type of the audio reproduction apparatus.

It should be noted that the present invention is by no means limited to the embodiments explained above.

As described above in detail, according to the present invention, since the surround audio output is supplied to the speakers as well as to the external equipment, the surround audio signal can be reproduced using the external equipment by providing the dedicated output terminals, respectively.

## Claims

1. An audio reproduction apparatus having an input terminal (26) which receives input audio signals; and an extraction unit (41) which extracts and outputs a main audio signal and a surround audio signal from the audio signals received by the input terminal, **characterized by** further comprising:
a signal processing unit (15) which amplifies the main audio signal output from the extraction unit and outputs the main audio signal to a first output unit (22), amplifies the surround audio signal output therefrom and outputs the signal to a second output unit (23) for external speakers, and further outputs the surround audio signal to a third output unit (24) for external equipment.

2. An audio reproduction apparatus according to claim 1, **characterized in that** the signal processing unit outputs the surround audio signal to the second and third output units at the same time.

3. An audio reproduction apparatus according to claim 1, **characterized in that** the input signal is a 4-channel or 5.1-channel audio signal.

4. An audio reproduction apparatus according to claim 1, **characterized in that** the signal processing unit receives a gain control signal and controls the gain of the main audio signal and the gain of the surround audio signal in association with each other in response to the gain control signal.

5. An audio reproduction apparatus according to claim 1, **characterized in that** the signal processing unit receives a control signal and controls the balance between the gain of the main audio signal and the gain of the surround audio signal in response to the control signal.

6. An audio reproduction apparatus according to claim 1, **characterized in that** the input signal is a 4-channel or 5.1-channel audio signal, the audio reproduction apparatus comprises built-in speakers, and when the main audio signal is supplied to the external speakers through the first output unit, a center audio signal of the 4-channel or 5.1-channel audio signal is supplied to the built-in speakers.

7. A video receiving apparatus having an input terminal (26) which receives input signals including a video signal and an audio signal; a separation unit (14) which separates the audio signal and the video signal from the input signals received by the input terminal; an image processing unit (12) which processes the video signal from the separation unit and displays the video signal on a display unit; and an extraction unit (41) which receives the separated audio signal, and which extracts a main audio signal and a surround audio signal from the input audio signal and outputs the main audio signal and the surround audio signal, **characterized by** further comprising:
a signal processing unit (15) which amplifies the main audio signal output from the extraction unit and outputs the main audio signal to a first output unit (22), amplifies the surround audio signal output therefrom and outputs the signal to a second output unit (23) for external speakers, and further outputs the surround audio signal to a third output unit (24) for external equipment.

8. A video receiving apparatus according to claim 7, **characterized in that** the signal processing unit outputs the surround audio signal to the second and third output units at the same time.

9. A video receiving apparatus according to claim 7, **characterized in that** the audio input signal is a 4-channel or 5.1-channel audio signal.

10. A video receiving apparatus according to claim 7, **characterized in that** the signal processing unit receives a gain control signal and controls the gain of the main audio signal and the gain of the surround audio signal in association with each other in response to the gain control signal.

11. A video receiving apparatus according to claim 7, **characterized in that** the signal processing unit receives a control signal and controls the balance between the gain of the main audio signal and the gain of the surround audio signal in response to the control signal.

12. A video receiving apparatus according to claim 7, **characterized in that** the input signal is a 4-channel or 5.1 channel audio signal, and the video receiving apparatus has built-in speakers, and when the main audio signal is supplied to external speakers through the first output unit, a center audio signal of the 4-channel or 5.1 channel audio signal is supplied to the built-in speakers.
